Europäisches Patentamt

European Patent Office

Office européen des brevets

(19)

(11) Veröffentlichungsnummer : **0 041 950**
**B1**

(12) **EUROPÄISCHE PATENTSCHRIFT**

(45) Veröffentlichungstag der Patentschrift :
15.08.84

(21) Anmeldenummer : 80901325.3

(22) Anmeldetag : 28.07.80

(86) Internationale Anmeldenummer :
PCT/CH 80/00089

(87) Internationale Veröffentlichungsnummer :
WO/8101639 (25.06.81 Gazette 81/15)

(51) Int. Cl.³ : **A 01 G 23/04, B 65 D 85/52**

(54) VERPACKUNGSMITTEL UND VERFAHREN ZUM PFLANZFERTIGEN VERPACKEN WURZELNACKTER ZIER-, NUTZ- ODER WILDGEHÖLZE UND NACH DEM VERFAHREN MIT DEM VERPACKUNGSMITTEL VERPACKTES ZIER-, NUTZ- ODER WILDGEHÖLZ.

(30) Priorität : 14.12.79 CH 11297/79

(43) Veröffentlichungstag der Anmeldung :
23.12.81 Patentblatt 81/51

(45) Bekanntmachung des Hinweises auf die Patenterteilung : 15.08.84 Patentblatt 84/33

(84) Benannte Vertragsstaaten :
AT CH DE FR GB LI NL

(56) Entgegenhaltungen :
DE-A- 2 349 088
DE-A- 2 617 146
DE-C-   145 483
FR-A- 2 353 222

(73) Patentinhaber : ROTHMANN, Ewald
Moos 1
CH-2553 Safnern (CH)

(72) Erfinder : ROTHMANN, Ewald
Moos 1
CH-2553 Safnern (CH)

(74) Vertreter : Keller, Hartmut et al
Hartmut Keller Dr. René Keller Postfach 12
CH-3000 Bern 7 (CH)

## Beschreibung

Die Erfindung bezieht sich auf ein Verfahren und Verpackungsmittel zum pflanzfertigen Verpacken wurzelnackter Zier-, Nutz- oder Wildgehölze und auf nach dem Verfahren mit dem Verpackungsmittel verpacktes Zier-, Nutz oder Wildgehölz.

Zum Verpacken wurzelnackter Gehölze dieser Art wird deren Wurzelstock in ein Verpackungsmittel gewickelt, das die Wurzeln nicht nur vor Beschädigungen und vor dem Austrocknen schützt, sondern auch der Lebenserhaltung und Wachstumsförderung des Gehölzes dient. Ein Verpackungsmittel der im Oberbegriff des Anspruchs 1 angegebenen Art ist aus der FR-A-2 353 222 bekannt. Das bekannte Verpackungsmittel ist nur im feuchten Zustand beständig. Wenn es trocknet, zerbröckelt das Material der Torfmull enthaltenden Schicht und bildet eine bröckelige, formlose, nicht mehr an der Trägerschicht haftende Masse. Das Verpackungsmittel ist dann in die Trägerschicht und die lose, bröckelige Masse zerfallen. Es ist nicht mehr verwendbar und somit nur beschränkt lagerfähig. Das hat für Hersteller, Händler und Verwender erhebliche Nachteile. Die Herstellung solcher Verpackungsmittel erfolgt auf Maschinen der zur Herstellung von Papier oder Pappe üblichen Art, mit dem Unterschied, dass das Erzeugnis nicht getrocknet wird. Nach Herstellung des Verpackungsmittels müssen die Maschinen sehr gründlich aufwendig gereinigt werden, bevor sie wieder für ihren ursprünglichen Zweck verwendet werden können, denn Papier oder Pappe dürfen keinesfalls von der Herstellung des Verpackungsmittels zurückgebliebene Stoffe (u. a. z. B. Dünger) enthalten. Die Kosten für die Reinigung fallen umso weniger ins Gewicht, je grösser die Menge der jeweils hergestellten Verpackungsmittel ist. Wegen der begrenzten Lagerfähigkeit konnte bisher aber jeweils nur der Bedarf für wenige Wochen produziert werden. Beim Händler und Verwender hatte die kurze Lagerfähigkeit zur Folge, dass entweder bei einem kleineren Lagerbestand gelegentlich nicht genügend Verpackungsmittel vorhanden waren oder dass die Verpackungsmittel bei einem grösseren Lagerbestand gelegentlich zu lange lagerten und dann nicht mehr brauchbar waren. Ein weiterer Nachteil des bekannten Verpackungsmittels besteht darin, dass die Torfmull enthaltende Schicht bei feuchter Lagerung zur Bildung von Schimmelpilzen neigt. Deshalb konnte die Lagerfähigkeit auch nicht etwa durch eine luftdichte Umhüllung verlängert werden, denn der Luftabschluss würde die Bildung von Schimmelpilzen fördern. Gegen die Verwendung chemischer, eine Schimmelpilzbildung verhindernder Zusätze bestehen grundsätzliche Bedenken, weil diese in die Erde gelangen und u. U. der wichtigen, späteren Zersetzung des Verpackungsmittels zu Humus entgegenwirken.

Hier will die Erfindung Abhilfe schaffen. Der Erfindung, wie sin in den Ansprüchen gekennzeichnet ist, liegt die Aufgabe zugrunde, ein Verpackungsmittel der genannten Art zu schaffen, das praktisch unbegrenzt lagerfähig ist, was sich auch auf die Lagerfähigkeit des verpackten Gehölzes auswirkt. Beim erfindungsgemässen Verpackungsmittel ist der Torfmull der von der Trägerschicht getragenen Schicht mit Zellulose, insbesondere Rohzellulose, als sich im Boden zu Humus zersetzenden Bindelmittel vermischt, und zwar in einer solchen Menge, dass der Torfmull auch im trockenen Zustand zusammengehalten und an die Trägerschicht gebunden ist. Obwohl Torfmull (ebenso wie Torf) von Natur aus noch freie Zellulose enthält, hat er ganz besonders im trockenen Zustand ein bröckliges Gefüge, mit dem keine zusammenhaltende und an der Trägerschicht haftende Schicht gebildet werden kann. Erst dadurch, dass der Torfmull mit der erforderlichen Menge Zellulose als Bindemittel vermischt ist, wird erreicht, dass die Torfmull enthaltende Schicht zusammengehalten und an die Trägerschicht gebunden ist.

Die durch die Erfindung erzielten Vorteile bestehen im wesentlichen darin, dass das Verpackungsmittel in trockenem Zustand praktisch unbegrenzt lagerfähig ist, womit alle oben angegebenen Nachteile vermieden sind. Ein Vorteil des mit dem Verpackungsmittel verpackten Gehölzes besteht darin, dass die als Bindemittel wirkende Zellulose auch den durch Umwickeln des Wurzelstockes mit dem Verpackungsmittel gebildeten Wickel ohne weiteres hinreichend zusammenhält. Dies erleichtert den Verpackungsvorgang und auch das Einsetzen des Wickels in den Boden beim Pflanzen des Gehölzes. Wenn bei längerer Lagerung die äusserste Windung des Wickels trocknet, würde der Torfmull ohne die Zellulose als Bindemittel dort zerbröckeln und eine lockere Schicht bilden, die ein Fortschreiten des Trocknungsvorgangs ins Innere des Wickels erleichtern würde. Somit wird durch die Erfindung auch die Lagerfähigkeit des verpackten Gehölzes verlängert.

Das Verpackungsmittel zum pflanzfertigen Verpacken wurzelnackter Zier-, Nutz oder Wildgehölze besteht aus einer Trägerschicht und einer von dieser getragenen Schicht. Die Trägerschicht ist wasser- und luftdurchlässig, sie ist zweckmässig ein Gewebe oder Geflecht, kann aber auch ein Filz oder Vlies sein. Sie besteht aus einem im Erdboden sich zu Humus zersetzenden Material, zweckmässig aus pflanzlichen Fasern, z. B. Jute-, Hanf-, Sisal-, Kokos- oder Baumwollfasern. Tierische Haare sind ebenfalls geeignet, aber bedeutend kostspieliger. Die Trägerschicht trägt eine Schicht, die Torfmull enthält, der mit Zellulose, insbesondere Rohzellulose, vermischt ist. Die Zellulose, insbesondere Rohzellulose ist als sich im Boden zu Humus zersetzendes Bindemittel in einer Menge zugemischt, dass der Torfmull auch in trockenem Zustand zusammengehalten wird und an die Trägerschicht gebunden ist. Das Trockengewichtsverhältnis der Zellulose zum Torfmull kann 1 : 1 bis 1 : 9 betragen. Die Torfmull-Zellulose-Schicht kann zusätzlich noch dem betreffenden Gehölz angepassten Dünger (Natur-, Kunst- oder Mineraldünger) enthalten. Länge und Breite des Verpackungsmittels sind so zu bemessen, dass es den Wurzelstock nicht nur an seiner ganzen Länge bedeckt, sondern über die Wurzelenden hinausragt und mehrmals um den Wurzelstock gewickelt werden kann. Die Dicke des Verpackungsmittels ist so zu bemessen, dass es sich an die Wurzelnanschmiegt, wenn es mit Wasser angefeuchtet und danach um den Wurzelstock gewickelt wird. Das Verpackungsmittel kann unter Verwendung einer Torfmull, Zellulose und Wasser (gegebenenfalls auch Dünger) enthaltenden Masse nach Art der Papier- oder Pappeherstellung erhalten werden.

Zum pflanzfertigen Verpacken eines wurzelnackten Zier-, Nutz- oder Wildgehölzes wird das Verpackungsmittel mit der Torfmull-Bindemittel-Schicht nach innen um die nackten Wurzeln gewickelt, derart, dass es über die Wurzelspitzen hinausragt. Dazu wird das in trockenem Zustand gelieferte und gelagerte Verpackungsmittel derart mit Wasser angefeuchtet, z. B. durch ein Wasserbad gezogen, dass es biegsam ist und sich an die Wurzeln anschmiegt. Wenn das Verpackungsmittel ein oder einige Male um die Wurzeln herumgelegt ist, wird der in diesem Zustand teilweise gebildete Wickel an dem Ende, das den Wurzelspitzen benachbart ist, geschlossen, indem der die Wurzelspitzen überragende Teil des Verpackungsmittels umgefaltet wird. Daraufhin wird der dabei ebenfalls umgefaltete Rest des Verpackungsmittels um den bis dahin teilweise gebildeten Wickel gelegt. Der fertige Wickel ist durch die als Bindemittel wirkende Zellulose hinreichend zusammengehalten. Das Gehölz, dessen Wurzeln in dem Wickel stecken, wird in einen Beutel aus feuchtigkeitsbeständigem, mit Luftlöchern versehenen Material z. B. Kunststoffolie, gesteckt.

Die Anzahl und die Grösse der Luftlöcher ist so zu bemessen, dass einerseits so viel Luft in den Beutel gelangt, wie nötig ist, um die Bildung von Schimmelpilz am feuchten Wickel zu verhindern, andererseits möglichst wenig feuchte Luft aus dem Beutel austritt, damit der Wickel genügend lange feucht bleibt.

Das so verpackte Zier-, Nutz- oder Wildgehölz bleibt wochenlang pflanzfertig, und kann auch nach dem Austreiben von Knospen keinen Schaden nehmen. Der die Wurzeln umgebende Wickel wird, so wie er ist, eingepflanzt. Eine Beschädigung feiner Wurzeln, die während der Lagerung gewachsen sind, ist augeschlossen, da diese erfahrungsgemäss nicht aus dem Wickel herauswachsen und der Wickel keine Veränderung erfährt, weil er infolge der Trägerschicht und des Bindemittels formbeständig bleibt. Nach dem Einpflanzen verwandeln sich die Trägerschicht und das Bindemittel in kurzer Zeit zu Humus und damit zu nahrung für das Gehölz.

Das erfindungsgemässe Verpackungsmittel ist preiswert herstellbar und hat nur vorteilhafte, aber keinerlei nachteilige Wirkungen auf das Gehölz. Es ist umweltfreundlich. Das beschriebene Verpackungsverfahren ist einfach sowie zeitsparend, seine Durchführung erfordert keinerlei besondere Vorrichtung und ist schonend für das Gehölz.

## Ansprüche

1. Verpackungsmittel zum pflanzfertigen Verpacken wurzelnackter Zier-, Nutz- oder Wildgehölze, das aus einer luft- und wasserdurchlässigen Trägerschicht aus einem im Erdboden sich zu Humus zersetzenden Material und einer von dieser getragenen Schicht, die Torfmull enthält, besteht und im mit Wasser angefeuchteten Zustand mit der Torfmull enthaltenden Schicht den Wurzeln jeweils eines Gehölzes zugewandt um den Wurzelstock zu wickeln ist, um beim Pflanzen den so umwickelten Wurzelstock in die Erde zu setzen, dadurch gekennzeichnet, dass der Torfmull der von der Trägerschicht getragenen Schicht mit Zellulose, insbesondere Rohzellulose, als sich im Boden zu Humus zersetzenden Bindemittel vermischt ist, und zwar in einer solchen Menge, dass der Torfmull auch im trockenen Zustand zusammengehalten und an die Trägerschicht gebunden ist.

2. Verpackungsmittel nach Anspruch 1, dadurch gekennzeichnet, dass das Trockengewichtsverhältnis der Zellulose zum Torfmull 1 : 1 bis 1 : 9 ist.

3. Verpackungsmittel nach Anspruch 1, oder 2, dadurch gekennzeichnet, dass die Trägerschicht ein Gewebe oder Geflecht oder ein Filz oder Vlies ist.

4. Verpackungsmittel nach einem der Ansprüche 1 bis 3, dadurch gekennzeichnet, dass die Trägerschicht aus pflanzlichen Fasern, z. B. Jute-, Hanf-, Sisal-, Kokos- oder Baumwollfasern hergestellt ist.

5. Verpackungsmittel nach einem der Ansprüche 1 bis 4, dadurch gekennzeichnet, dass die Torfmull-Bindemittel-Schicht Dünger enthält.

6. Verfahren zum pflanzfertigen Verpacken wurzelnackter Zier-, Nutz oder Wildgehölze mit dem Verpackungsmittel nach einem der Ansprüche 1 bis 5, dadurch gekennzeichnet, dass man das trockene, steife Verpackungsmittel mit Wasser anfeuchtet, dadurch biegsam macht und danach mit der Torfmull-Bindemittel-Schicht den nackten Wurzeln zugewandt um die Wurzeln wickelt.

7. Verfahren nach Anspruch 6, dadurch gekennzeichnet, dass man die Wurzeln in das sich vom oberen Ende des Wurzelstockes bis über die Wurzelenden hinaus erstreckende Verpackungsmittel wickelt und den die Wurzelenden überragende Teil desselben zum oberen Ende des Wurzelstockes hin umfaltet, nachdem eine oder mehrere Windungen des Verpackungsmittels um die Wurzeln gelegt sind, und dass man dessen Rest danach in mindestens einer weiteren Windung um die Wurzeln wickelt.

8. Verfahren nach Anspruch 6 oder 7, dadurch gekennzeichnet, dass man den aus dem um die Wurzeln gewickelten Verpackungsmittel bestehenden Wickel um den nach dem Einpflanzen oberirdischen Teil des Gehölzes in einem vor dem Pflanzen zu entfernenden Beutel aus wasserbeständigem, mit Luftlöchern versehenen Material verpackt und den Beutel am oberen Ende des ganzen Gehölzes verschliesst.

9. Mit dem Verpackungsmittel nach Anspruch 1 nach dem Verfahren nach Anspruch 6 pflanzfertig verpackte Zier-, Nutz- oder Wildgehölze.

**Claims**

1. A packaging means for the ready-to-plant packaging of bare-root ornamental, utility or wild woody plants, which consists of a carrier layer, pervious to air and water, of a material which decomposes into humus in the ground and a layer, carried thereby, containing peat moss, and which is to be wound, in the water-moistened state, with the layer containing peat moss facing the roots or in the case of a woody plant, around the root-stock, in order upon planting to place the thus enwrapped root-stock into the ground, characterised in that the peat moss of the layer carried by the carrier layer is mixed with cellulose, more especially raw cellulose, as binding agent which decomposes into humus in the ground, namely in such an amount that the peat moss even in the dry state is held together and is bound to the carrier layer.

2. A packaging means according to claim 1, characterised in that the dry-weight ratio of the cellulose to the peat moss is 1 : 1 up to 1 : 9.

3. A packaging means according to claim 1 or 2, characterised in that the carrier layer is a fabric or mesh or a felt or fleece.

4. A packaging means according to one of claims 1 to 3, characterised in that the carrier layer is produced from vegetable fibres, for example jute, hemp, sisal, coconut or cotton fibres.

5. A packaging means according to one of claims 1 to 4, characterised in that the peat moss/binding agent layer contains manure.

6. A method for the ready-to-plant packaging of bare-root ornamental, utility or wild woody plants with the packaging means according to one of claims 1 to 5, characterised in that the dry stiff packaging means is moistened with water, thereby to be made pliable and after that is wound, with the peat moss/binding agent layer facing the bare roots, around the roots.

7. A method according to claim 6, characterised in that the roots are wrapped with the packaging means extending from the upper end of the root-stock as far as beyond the root ends, and that part of the same which projects beyond the root ends is folded over towards the upper end of the root-stock, after one or more windings of the packaging means have been placed around the roots, and in that the remainder thereof is thereafter wound in at least one further winding around the roots.

8. A method according to claim 6 or 7, characterised in that the roll, consisting of the packaging means wound around the roots, is packed, around that part of the woody plant which is above the ground after planting, in a bag, to be removed prior to planting, made from water-resistant material provided with air-holes, and the bag is closed at the upper end of the entire woody plant.

9. Ornamental, utility or wild woody plants packed in a ready-to-plant manner in accordance with the method according to claim 6 with the packaging means according to claim 1.

**Revendications**

1. Moyen d'emballage pour l'emballage d'arbustes d'ornement, de production ou sauvages à racines nues, prêts à planter, constitué d'une couche-support perméable à l'air et à l'eau composée d'une matière se décomposant en humus dans le sol, et d'une couche portée par la première, contenant du poussier de tourbe, ce moyen d'emballage devant être enroulé, à l'état mouillé par de l'eau, autour du rhizome d'un arbuste, la couche contenant le poussier de tourbe étant tournée vers les racines ; avant de planter en terre le rhizome ainsi emballé, caractérisé en ce que le poussier de tourbe de la couche portée par la couche-support est mélangé à de la cellulose, notamment de la cellulose brute, servant de liant se décomposant en humus dans la terre, dans une proportion telle que le poussier de tourbe est maintenu ferme, même à l'état sec, et adhère à la couche-support.

2. Moyen d'emballage suivant la revendication 1, caractérisé en ce que le rapport en poids sec de la cellulose au poussier de tourbe est compris entre 1 : 1 et 1 : 9.

3. Moyen d'emballage suivant l'une quelconque des revendications 1 et 2, caractérisé en ce que la couche-support est un tissu, un treillis, un feutre ou un voile.

4. Moyen d'emballage suivant l'une quelconque des revendications 1 à 3, caractérisé en ce que la couche-support est constituée de fibres végétales, telles que fibres de jute, de chanvre, de sisal, de coco ou de coton.

5. Moyen d'emballage suivant l'une quelconque des revendications 1 à 4, caractérisé en ce que la couche poussier de tourbe-liant contient de l'engrais.

6. Procédé d'emballage d'arbustes d'ornement, de production ou sauvages à racines nues, prêts à planter, avec le moyen d'emballage suivant l'une quelconque des revendications 1 à 5, caractérisé en ce que l'on mouille d'eau le moyen d'emballage sec, rigide, pour l'assouplir et l'enrouler ensuite autour des racines, la couche poussier de tourbe-liant étant tournée vers les racines nues.

7. Procédé suivant la revendication 6, caractérisé en ce que l'on enroule les racines dans le moyen d'emballage depuis l'extrémité supérieure du rhizome jusqu'aux extrémités des racines, et que l'on replie vers le haut du rhizome la partie de l'emballage dépassant les extrémités des racines, après avoir enroulé une ou plusieurs fois le moyen d'emballage autour des racines, et en ce que l'on enroule au moins une fois encore le reste de l'emballage autour des racines.

8. Procédé suivant l'une quelconque des revendications 6 et 7, caractérisé en ce que l'on enferme la balle, constituée du moyen d'emballage enroulé autour des racines, ainsi que la partie de l'arbuste se trouvant au-dessus du sol après plantation, dans un sac — à jeter avant de planter — en matière résistant à l'eau, pourvue de trous d'aération, et en ce que l'on ferme le sac à l'extrémité supérieure de l'arbuste tout entier.

9. Arbuste d'ornement, de production ou sauvage, prêt à planter, emballé avec le moyen d'emballage suivant la revendication 1, selon le procédé de la revendication 6.